# FASCICULE DE BREVET EUROPEEN

(11) **EP 2 903 155 B1**
(45) Date de publication et mention de la délivrance du brevet: **05.07.2017**
(21) Numéro de dépôt: 14305151.4
(22) Date de dépôt: 04.02.2014
(51) Int. Cl.: H02P 25/22

(54) **Dispositif de commande de deux moteurs polyphasés**
Steuervorrichtung für zwei Mehrfachphasenmotoren
Device for controlling two multiphase motors

(43) Date de publication de la demande: 05.08.2015
(73) Titulaire: Thales, 92400 Courbevoie (FR)
(72) Inventeur: Michel, Raymond, 6110 Montigny-le-Tilleul (BE); Bekemans, Marc, 6120 Nalinnes (BE); Guillaume, Michel, 1428 Lillois-Witterzee (BE); Semail, Eric, 59000 Lille (FR)
(74) Mandataire: Brunelli, Gérald

(56) Documents cités:
- CN-U- 202 856 682
- DE-A1-102008 045 101
- US-A1- 2010 071 970
- US-A1- 2010 097 027

## Description

L'invention porte sur un dispositif de commande ou de gestion du fonctionnement de deux moteurs polyphasés et leur alimentation.

Il est connu, pour réaliser la commande d'une machine électrique, d'utiliser les composantes Id et Iq du courant statorique, exprimés dans le repère de Park, permettant, par exemple, de découpler la commande du flux et du couple dans la machine électrique. Ces valeurs des composantes Id et Iq sont obtenues grâce à l'instrumentation usuelle utilisée pour la commande de machines électriques.

Il est également connu, voir par exemple DE102008045101, pour rendre un ensemble onduleur/moteur courant alternatif (polyphasé) robuste à une panne en circuit ouvert, d'ajouter un bras ou connexion d'onduleur raccordé soit au neutre, soit à une phase supplémentaire du moteur, ou, en d'autres termes, une branche supplémentaire du moteur correspondant à une phase supplémentaire du moteur, par exemple une quatrième phase pour un moteur triphasé. La commande du moteur est faite par la commande des interrupteurs de l'onduleur qui détermine les différentes alimentations des branches ou phases du moteur.

Ainsi, en cas de panne en circuit ouvert d'une phase d'un moteur polyphasé (branche du moteur correspondant à une phase), le moteur polyphasé reste opérationnel, car ce dernier reste pilotable grâce au nombre de phases restant opérationnelles qui est suffisant, le nombre de phases nécessaires ayant préalablement été augmenté de un.

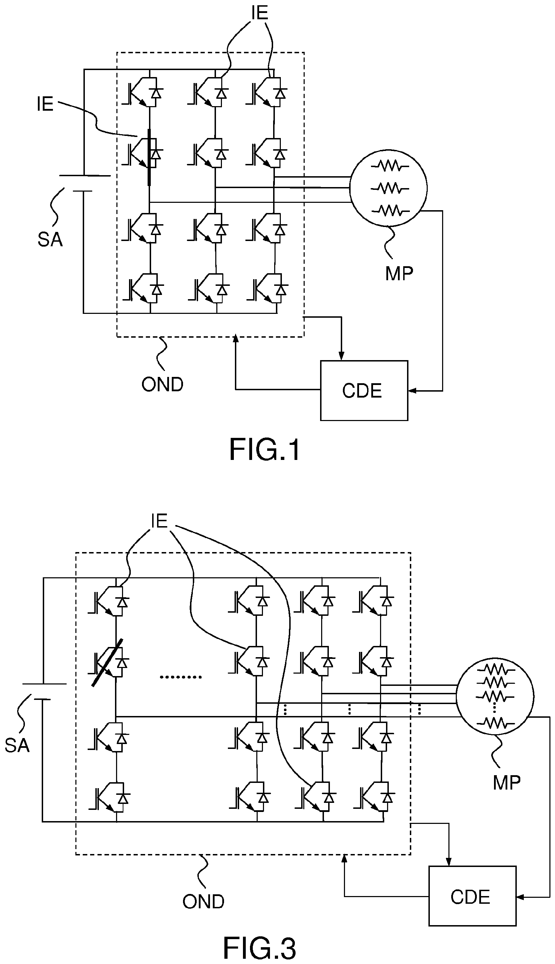

Il est également connu, comme illustré sur la figure 1, pour rendre un onduleur OND robuste à une panne en court-circuit, de réaliser une redondance en série des interrupteurs électroniques IE de l'onduleur OND, ce qui double le nombre d'interrupteurs électroniques IE de l'onduleur OND ainsi que les pertes électriques associées.

En ce cas, chaque interrupteur étant dupliqué en série, en cas de panne en court-circuit d'un interrupteur électronique IE, comme représenté par un trait plein gras traversant l'interrupteur électronique court-circuité, IECC, la fonction d'interrupteur est assurée par l'interrupteur électronique IE dupliqué restant. Ainsi, le module de commande CDE peut toujours commander le moteur polyphasé MP, en l'espèce un moteur triphasé.

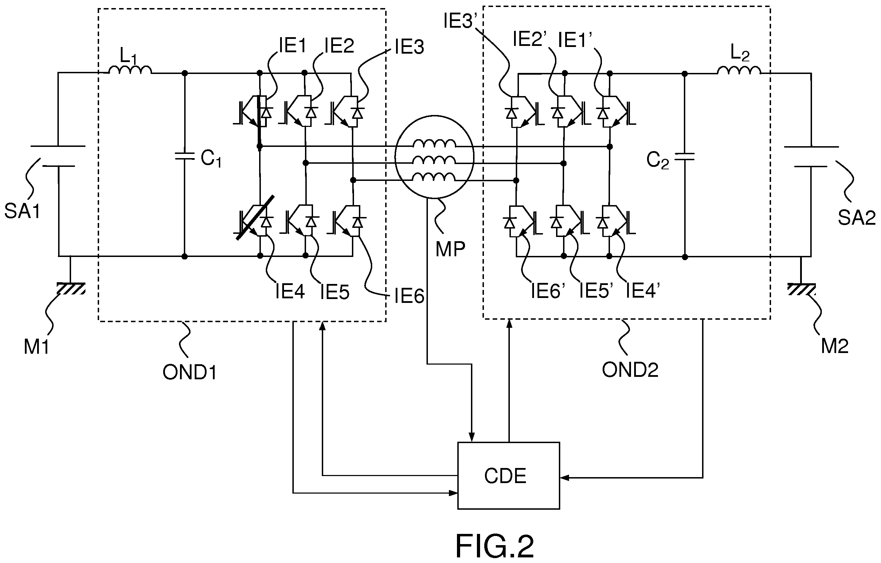

Il est également connu, comme illustré sur la figure 2, une solution pour rendre un ensemble onduleur/moteur polyphasé MP, en l'espèce un moteur triphasé, robuste à une panne en court-circuit, consistant à dupliquer l'onduleur de sorte que le moteur MP soit commandé par l'intermédiaire de deux onduleurs OND1 et OND2, respectivement alimentés par deux sources d'alimentations électriques SA1 et SA2 flottantes sans connexion directe entre SA1 et SA2, ou, en d'autres termes deux sources d'alimentations électriques de masses distinctes.

Si l'interrupteur électronique IE1 est en panne en court-circuit, comme représenté par un trait gras vertical sur la figure 2 l'interrupteur électronique IE4 doit être ouvert, comme représenté en trait gras oblique sur la figure 2, en utilisant par exemple le principe de désaturation, bien connu pour la technologie IGBT, acronyme de "Insulated Gate Bipolar Transistor" en langue anglaise, de manière à ne pas court-circuiter la source d'alimentation SA1, telle une batterie. Aussi, pour que le module de commande CDE puisse toujours commander le moteur polyphasé MP, en l'espèce un moteur triphasé, il est possible de fermer les interrupteurs IE2 et IE3, ce qui crée un point neutre. Ce neutre étant relié à la source d'alimentation SA1 de l'onduleur OND1, et les deux sources d'alimentation SA1, SA2 étant flottantes, le moteur polyphasé MP peut toujours être commandé par le module de commande CDE par l'intermédiaire de l'autre onduleur OND2.

Pour rendre un onduleur OND robuste à une panne en circuit ouvert, il est possible d'ajouter au moins une phase au moteur MP, comme illustré sur la figure 3. En effet, en cas de perte d'un interrupteur électronique IE en circuit ouvert, comme représenté par un trait gras oblique sur un interrupteur électronique IE sur la figure 3, la phase correspondante ne peut plus être commandée et est donc inutilisable. Toutefois, il reste au moins le nombre de phases nécessaire à la commande du moteur MP, puisqu'au moins une phase a été ajoutée au moteur polyphasé MP. Ainsi, le module de commande CDE peut toujours commander le moteur polyphasé MP par l'intermédiaire de l'onduleur OND.

Un but de l'invention est de pouvoir commander indépendamment et simultanément deux moteurs hexaphasés, avec une résistance aux pannes en circuit ouvert et éventuellement court-circuit, tout en limitant les coûts et en réduisant les pertes électriques.

Aussi, il est proposé, selon un aspect de l'invention, un dispositif de commande de deux moteurs polyphasés comprenant :
- une première source d'alimentation à tension électrique continue reliée à une première masse, connectée directement à un premier onduleur associé,
- des moyens de commande des composants du dispositif,
- un premier moteur hexaphasé à six branches correspondant à six phases uniformément réparties spatialement, connecté directement au premier onduleur,
- un deuxième moteur hexaphasé à six branches correspondant à six phases uniformément réparties spatialement, lesdits premier et deuxième moteurs hexaphasés à six branches correspondant à six phases uniformément réparties spatialement, interconnectées en série, et
- une deuxième source d'alimentation à tension électrique continue reliée à une deuxième masse différente de la première masse, sans connexion directe entre les première et deuxième sources d'alimentation, la deuxième source d'alimentation étant connectée directement à un deuxième onduleur associé, le deuxième onduleur étant connecté directement au deuxième moteur hexaphasé, ou un point neutre relié directement aux six phases du deuxième moteur hexaphasé,
ladite interconnexion en série des deux moteurs hexaphasés comprenant des connexions deux à deux de branches respectives successives des deux moteurs hexaphasés, lesdites connexions étant alternativement en phase et en opposition de phase.

Cette interconnexion permet de pouvoir commander de manière indépendante deux moteurs hexaphasés, à coût réduit et en minimisant les pertes, avec seulement un ou deux onduleurs, tout en restant robuste aux pannes en circuit ouvert, et, pour les modes de réalisation comprenant deux onduleurs, également robustes aux pannes en court-circuit. L'indépendance de la commande est obtenue grâce une paire de courants Id et Iq pour chacun des deux moteurs hexaphasés, ces paires de courants étant rendues indépendantes grâce à la connexion particulière des deux moteurs hexaphasés.

Les moyens de commande comprennent une instrumentation, il s'agit de la mesure des courants de phase (au moins cinq mesures de courant, la sixième mesure étant égale à l'opposé de la somme des cinq autres (vu que la somme des six courants de phase est nulle), de la tension continue de l'alimentation continue ou des deux alimentations continues, et généralement des grandeurs mécaniques des deux machines (position et/ou vitesse). Ces mesures sont généralement utilisées par le système de commande. Elles permettent de générer les valeurs des composantes Id et Iq pour les deux machines, valeurs qui sont utilisées directement pour la commande.

Dans un mode de réalisation, le dispositif comprend un point neutre relié directement aux six phases du deuxième moteur hexaphasé, dans lequel le premier onduleur comprend des interrupteurs dédoublés.

Ainsi, le dédoublement des interrupteurs permet une gestion transparente du court-circuit de l'onduleur, comme le système ne nécessite ni détection de panne en court-circuit de l'interrupteur, ni création d'un point neutre artificiel en cas de défaut.

Dans un autre mode de réalisation, le dispositif comprend une deuxième source d'alimentation à tension électrique continue reliée à une deuxième masse différente de la première masse, connectée directement à un deuxième onduleur associé, le deuxième onduleur étant connecté directement au deuxième moteur hexaphasé, dans lequel une liaison électrique entre une borne d'une source d'alimentation alimentant directement l'onduleur associé et une branche du moteur hexaphasé auquel l'onduleur est directement connecté comprend un unique interrupteur électronique.

Ainsi, le dispositif est résistant aux pannes en circuit ouvert et en court-circuit, tout en limitant les coûts et en réduisant les pertes électriques.

Par exemple, la première source d'alimentation et le premier onduleur associé sont redondés.

Ainsi, la fiabilité du dispositif est accrue.

En cas de présence de deux ensembles source d'alimentation/onduleur, la première source d'alimentation et le premier onduleur associé, ainsi que la deuxième source d'alimentation et le deuxième onduleur associé sont redondés.

Ainsi, la fiabilité du dispositif est accrue.

Selon un autre aspect de l'invention, il est également proposé un système de commande de vérins électriques d'un lanceur spatial comprenant un dispositif tel que précédemment décrit, les deux moteurs hexaphasés dudit dispositif actionnant lesdits vérins.

Selon un autre aspect de l'invention, il est également proposé un lanceur spatial muni d'un système tel que précédemment décrit, notamment pour des vérins servant à l'orientation des tuyères du lanceur.

L'invention sera mieux comprise à l'étude de quelques modes de réalisation décrits à titre d'exemples nullement limitatifs et illustrés par les dessins annexés sur lesquels :
- les figures 1 à 3 illustrent schématiquement des dispositifs de l'état de l'art;
- les figures 4 et 5, illustrent un dispositif selon un aspect de l'invention, et
- les figures 6 et 7, illustrent un dispositif selon un aspect de l'invention.

Sur les différentes figures, les éléments ayant des références identiques sont identiques.

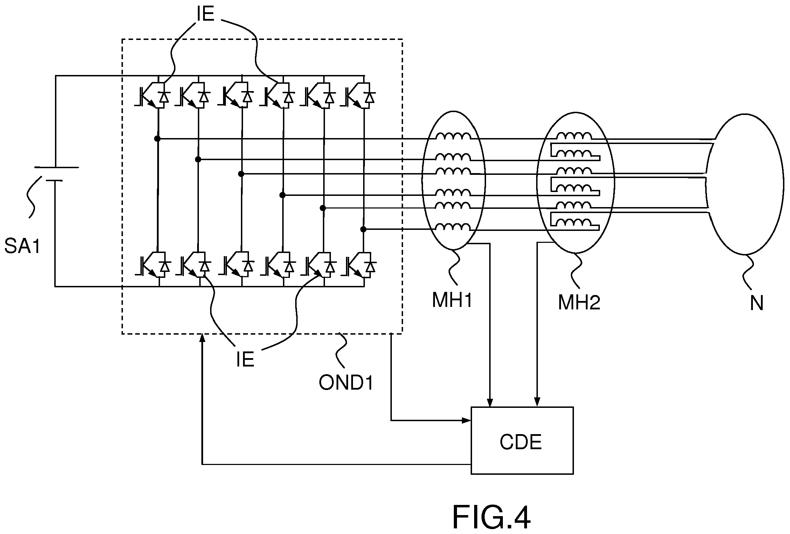

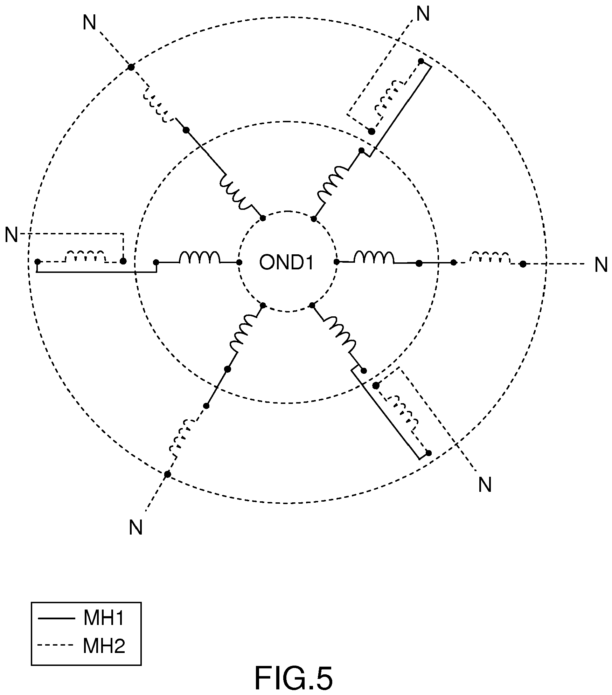

Les figures 4 et 5 illustrent un même mode de réalisation de l'invention, mais représenté différemment, comprenant un ensemble source d'alimentation/onduleur, et un point neutre.

Le dispositif de commande de deux moteurs polyphasés représentés sur la figure 4 comprend deux moteurs hexaphasés MH1, MH2, et une source d'alimentation à tension électrique continue SA1 par exemple une batterie électrique.

La source d'alimentation à tension électrique continue SA1 est directement connectée à un onduleur associé OND1.

Le dispositif comprend également un module de commande CDE permettant de commander les éléments du dispositif, et notamment le premier onduleur OND1 et plus généralement l'ensemble des éléments du dispositif.

Les deux moteurs hexaphasés MH1, MH2 comprennent chacun six branches correspondant respectivement à six phases uniformément réparties spatialement. Les deux moteurs hexaphasés MH1, MH2, sont reliés en série, selon une connexion particulière.

Le premier onduleur OND1 est connecté directement au premier moteurs hexaphasé MH1, et un point neutre N est relié directement aux six phases du deuxième moteur hexaphasé MH2.

Une liaison électrique entre une borne de la source d'alimentation SA1, alimentant directement l'onduleur associé OND1, et une branche du moteur hexaphasé MH1, auquel l'onduleur OND1 est directement connecté comprend un unique interrupteur électronique IE.

Bien entendu, en variante, ces liaisons électriques pourraient comporter plus d'un seul interrupteur électronique IE, de manière à le rendre robuste à la panne en court-circuit, mais cela augmenterait le coût et les pertes électriques du dispositif qui, tel qu'il est conçu, est robuste aux pannes et en circuit ouvert.

L'interconnexion en série des deux moteurs hexaphasés MH1, MH2, comprend des connexions deux à deux de branches respectives successives, ou, en d'autres termes, de phases respectives successives, alternativement en phase et en opposition de phase.

Cette interconnexion en série, pour laquelle les phases respectives successives sont respectivement connectées alternativement en phase et en opposition de phase, est également représentée sur la figure 5.

Les six phases du moteur hexaphasé MH1 sont représentées en traits pleins et les six phases du moteur hexaphasés MH2 sont représentées en traits interrompus courts, comme si l'on voyait les deux étoiles à six branches correspondant aux six phases des deux moteurs hexaphasés respectifs MH1, MH2, l'une derrière l'autre.

Une telle interconnexion des phases respectives successives des deux moteurs hexaphasés MP1 et MP2, alternativement en phase et en opposition de phase, permet de piloter indépendamment les deux moteurs hexaphasés MH1 et MH2.

Cela est obtenu grâce à l'indépendance des composantes Id et Iq du courant statorique dans un moteur électrique par rapport à l'autre. Des courants hexaphasés équilibrés dans le premier moteur hexaphasé MH1 créent un champ tournant dans le premier moteur hexaphasé MH1 et créent, grâce à la connexion particulière précédemment décrite entre les deux moteurs hexaphasés MH1 et MH2, un champ nul dans le deuxième moteur hexaphasé MH2. Dans le premier moteur hexaphasé MH1, six courants sont équilibrés et décalés temporellement de 60°. A un instant quelconque, les vecteurs courant dans chacun des deux moteurs hexaphasés MH1 et MH2 sont tels que dans le premier moteur hexaphasé MH1, les champs électriques s'additionnent par construction, alors que dans le deuxième moteur hexaphasé MH2, la résultante des champs électriques est nulle par construction.

Réciproquement, des courants équilibrés dans le deuxième moteur hexaphasé MH2 créent un champ tournant dans le deuxième moteur hexaphasé MH2 et ont une résultante nulle dans le premier moteur hexaphasé MH1.

En toute généralité, les courants utiles dans chaque moteur hexaphasé peuvent s'apparenter aux courants Id et Iq pour chaque moteur hexaphasé, et permettent donc une commande indépendante des deux machines.

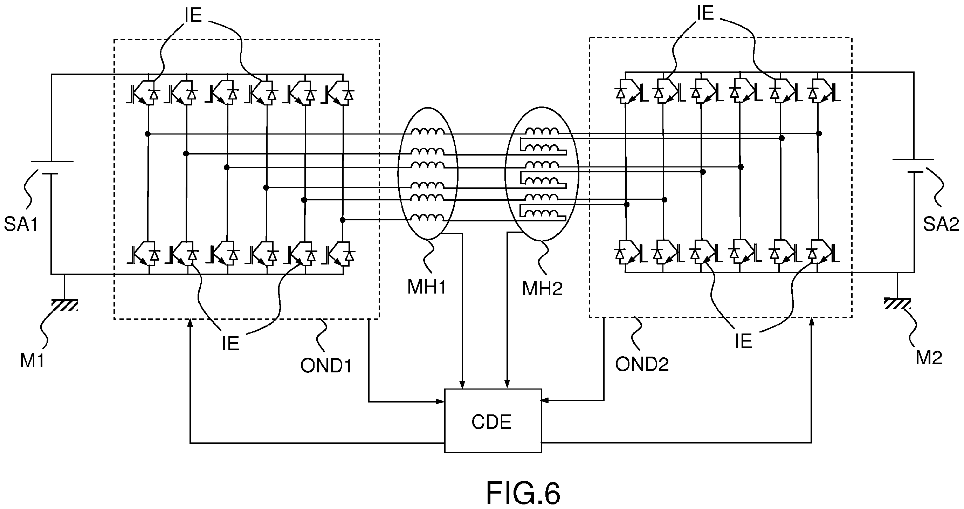

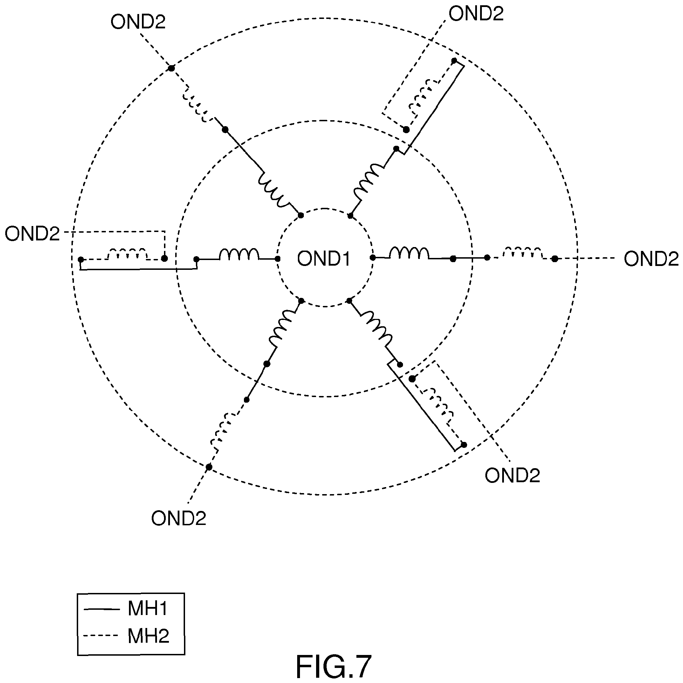

Les figures 6 et 7 illustrent un même mode de réalisation de l'invention, mais représenté différemment, comprenant deux ensembles sources d'alimentation/onduleur.

Le dispositif de commande de deux moteurs polyphasés représentés sur la figure 6 comprend deux moteurs hexaphasés MH1, MH2, et deux sources d'alimentation à tension électrique continue SA1, SA2, par exemple des batteries électriques.

Les deux sources d'alimentation à tension électrique continue SA1, SA2, sont dites flottantes, c'est-à-dire reliées à des masses respectives distinctes, de sorte qu'un éventuel courant de défaut ne puisse pas retourner à sa source au travers d'une masse commune. De plus, en cas de court-circuit d'un interrupteur d'un onduleur, cela permet par exemple de créer un point neutre flottant au travers de l'onduleur défaillant, permettant au dispositif de continuer à fonctionner correctement. Les deux sources d'alimentation à tension électrique continue SA1 et SA2 peuvent être différentes.

Chacune de ces deux sources d'alimentation à tension électrique continue SA1, SA2, est directement connectée à un onduleur associé OND1, OND2.

Le dispositif comprend également un module de commande CDE permettant de commander les deux onduleurs OND1, OND2, et plus généralement l'ensemble des éléments du dispositif.

Les deux moteurs hexaphasés MH1, MH2 comprennent chacun six branches correspondant respectivement à six phases uniformément réparties spatialement. Les deux moteurs hexaphasés MH1, MH2, sont reliés en série selon une connexion particulière.

Chacun des deux onduleurs OND1, OND2 est respectivement connecté directement à un des deux moteurs hexaphasés MH1, MH2.

Une liaison électrique entre une borne de la source d'alimentation SA1, alimentant directement l'onduleur associé OND1, et une branche du moteur hexaphasé MH1, auquel l'onduleur OND1 est directement connecté comprend un unique interrupteur électronique IE.

De même, une liaison électrique entre une borne de la source d'alimentation SA2, alimentant directement l'onduleur associé OND2, et une branche du moteur hexaphasé MH2, auquel l'onduleur OND2 est directement connecté comprend un unique interrupteur électronique IE.

Bien entendu, en variante, ces liaisons électriques pourraient comporter plus d'un seul interrupteur électronique IE, mais cela augmenterait le coût et les pertes électriques du dispositif qui, tel qu'il est conçu, est déjà robuste aux pannes en court-circuit et en circuit ouvert.

L'interconnexion en série des deux moteurs hexaphasés MH1, MH2, comprend des connexions deux à deux de branches respectives successives, ou, en d'autres termes, de phases respectives successives, alternativement en phase et en opposition de phase.

Cette interconnexion en série, pour laquelle les phases respectives successives sont respectivement connectées alternativement en phase et en opposition de phase, est également représentée sur la figure 7.

Les six phases du moteur hexaphasé MH1 sont représentées en traits pleins et les six phases du moteur hexaphasés MH2 sont représentées en traits interrompus courts, comme si l'on voyait les deux étoiles à six branches correspondant aux six phases des deux moteurs hexaphasés respectifs MH1, MH2, l'une derrière l'autre.

Une telle interconnexion des phases respectives successives des deux moteurs hexaphasés MP1 et MP2, alternativement en phase et en opposition de phase, permet de piloter indépendamment les deux moteurs hexaphasés MH1 et MH2.

Cela est obtenu grâce à l'indépendance des composantes Id et Iq du courant statorique dans un moteur électrique par rapport à l'autre. Les courants hexaphasés équilibrés dans le premier moteur hexaphasé MH1 créent un champ tournant dans le premier moteur hexaphasé MH1 et créent, grâce à la connexion particulière précédemment décrite entre les deux moteurs hexaphasés MH1 et MH2, un champ nul dans le deuxième moteur hexaphasé MH2. Dans le premier moteur hexaphasé MH1, six courants sont équilibrés et décalés temporellement de 60°. A un instant quelconque, les vecteurs courant dans chacun des deux moteurs hexaphasés MH1 et MH2 sont tels que dans le premier moteur hexaphasé MH1, les champs électriques s'additionnent par construction, alors que dans le deuxième moteur hexaphasé MH2, la résultante des champs électriques est nulle.

Réciproquement, des courants équilibrés dans le deuxième moteur hexaphasé MH2 créent un champ tournant dans le deuxième moteur hexaphasé MH2 et ont une résultante nulle dans le premier moteur hexaphasé MH1.

En toute généralité, ces courants peuvent s'apparenter aux courants Id et Iq pour chaque moteur hexaphasé, et permettent donc une commande indépendante des deux machines.

Un tel dispositif, peut, par exemple, être particulièrement adapté à un système de commande de vérins électriques d'un lanceur spatial, notamment pour commander l'orientation des tuyères du lanceur.

## Revendications

1. Dispositif de commande de deux moteurs polyphasés comprenant :
- une première source d'alimentation (SA1) à tension électrique continue reliée à une première masse (M1), connectée directement à un premier onduleur (OND1) associé à six bras,
- des moyens de commande (CDE) des composants du dispositif,
- un premier moteur hexaphasé (MH1) à six branches correspondant à six phases uniformément réparties spatialement, les six branches du premier moteur hexaphasé (MH1) étant respectivement connectées directement aux six bras du premier onduleur (OND1),
- un deuxième moteur hexaphasé (MH2) à six branches correspondant à six phases uniformément réparties spatialement, lesdits premier et deuxième moteurs hexaphasés (MH1, MH2) à six branches correspondant à six phases uniformément réparties spatialement, interconnectées en série, et
- une deuxième source d'alimentation (SA2) à tension électrique continue, reliée à une deuxième masse (M2) différente de la première masse (M1), sans connexion directe entre les première et deuxième sources d'alimentation (SA1, SA2), la deuxième source d'alimentation (SA2) étant connectée directement à un deuxième onduleur (OND2) associé à six bras, les six bras du deuxième onduleur (OND2) étant respectivement connectés directement aux six branches du deuxième moteur hexaphasé (MH2), ou un point neutre (N) relié directement aux six phases du deuxième moteur hexaphasé (MH2),
ladite interconnexion en série des deux moteurs hexaphasés (MH1, MH2) comprenant des connexions deux à deux de branches respectives successives des deux moteurs hexaphasés (MH1, MH2), lesdites connexions étant alternativement en phase et en opposition de phase.

2. Dispositif selon la revendication 1, comprenant un point neutre (N) relié directement aux six phases du deuxième moteur hexaphasé (MH2), dans lequel le premier onduleur (OND1) comprend des interrupteurs (IE) dédoublés en série.

3. Dispositif selon la revendication 1, comprenant une deuxième source d'alimentation (SA2) à tension électrique continue reliée à une deuxième masse (M2) différente de la première masse (M1), connectée directement à un deuxième onduleur associé (OND2), le deuxième onduleur (OND2) étant connecté directement au deuxième moteur hexaphasé (MH2), dans lequel une liaison électrique entre une borne d'une source d'alimentation (SA1, SA2) alimentant directement l'onduleur associé (OND1, OND2) et une branche du moteur hexaphasé (MH1, MH2) auquel l'onduleur (OND1, OND2) est directement connecté comprend un unique interrupteur électronique.

4. Dispositif selon l'une des revendications 1 à 3, dans lequel la première source d'alimentation (SA1) et le premier onduleur associé (OND1) sont redondés.

5. Dispositif selon la revendication 3, dans lequel la première source d'alimentation (SA1) et le premier onduleur associé (OND1), ainsi que la deuxième source d'alimentation (SA2) et le deuxième onduleur associé (OND2), sont redondés.

6. Système de commande de vérins électriques d'un lanceur spatial comprenant un dispositif selon l'une des revendications 1 à 5, les deux moteurs hexaphasés (MH1, MH2) dudit dispositif actionnant lesdits vérins.

7. Lanceur spatial muni d'un système selon la revendication 6.

## Patentansprüche

1. Vorrichtung zum Steuern von zwei Mehrphasenmotoren; die Folgendes umfasst:
- eine erste Gleichspannungsversorgungsquelle (SA1), die mit einer ersten Masse (M1) verbunden ist, die direkt mit einem ersten mit sechs Armen assoziierten Inverter (OND1) verbunden ist;
- Mittel (CDE) zum Steuern der Komponenten der Vorrichtung;
- einen ersten Sechsphasenmotor (MH1) mit sechs Zweigen entsprechend sechs gleichmäßig räumlich verteilten Phasen, wobei die sechs Zweige des ersten Sechsphasenmotors (MH1) jeweils direkt mit den sechs Armen des ersten Inverters (OND1) verbunden sind;
- einen zweiten Sechsphasenmotor (MH2) mit sechs Zweigen entsprechend sechs gleichmäßig räumlich verteilten Phasen, wobei der erste und der zweite Sechsphasenmotor (MH1, MH2) mit sechs Zweigen, die in Serie geschaltet sind, sechs gleichmäßig räumlich verteilten Phasen entsprechen, und
- eine zweite Gleichspannungsstromversorgungsquelle (SA2), die mit einer zweiten Masse (M2) verbunden ist, die sich von der ersten Masse (M1) unterscheidet, ohne direkte Verbindung zwischen der ersten oder zweiten Stromversorgungsquelle (SA1, SA2), wobei die zweite Stromversorgungsquelle (SA2) direkt mit einem zweiten mit sechs Armen assoziierten Inverter (OND2) verbunden ist, wobei die sechs Arme des zweiten Inverters (OND2) jeweils direkt mit den sechs Zweigen des zweiten Sechsphasenmotors (MH2) oder mit einem neutralen Punkt (N) verbunden ist, der direkt mit den sechs Phasen des zweiten Sechsphasenmotors (MH2) verbunden ist,
wobei die Serienverbindung der zwei Sechsphasenmotoren (MH1, MH2) paarweise Verbindungen von jeweiligen aufeinanderfolgenden Zweigen der zwei Sechsphasenmotoren (MH1, MH2) umfasst, wobei die Verbindungen abwechselnd gleichphasig und gegenphasig sind.

2. Vorrichtung nach Anspruch 1, die einen neutralen Punkt (N) umfasst, der direkt mit den sechs Phasen des zweiten Sechsphasenmotors (MH2) verbunden ist, wobei der erste Inverter (OND1) Schalter (IE) umfasst, die in Serie dupliziert sind.

3. Vorrichtung nach Anspruch 1, die eine zweite Gleichspannungsstromversorgungsquelle (SA2) umfasst, die mit einer zweiten Masse (M2) verbunden ist, die sich von der ersten Masse (M1) unterscheidet, direkt verbunden mit einem zweiten assoziierten Inverter (OND2), wobei der zweite Inverter (OND2) direkt mit dem zweiten Sechsphasenmotor (MH2) verbunden ist, wobei eine elektrische Verbindung zwischen einem Anschluss einer Stromversorgungsquelle, (SA1, SA2), die den assoziierten Inverter (OND1, OND2) direkt speist, und einem Zweig des Sechsphasenmotors (MH1, MH2), mit dem der Inverter (OND1, OND2) direkt verbunden ist, einen einzelnen elektronischen Schalter umfasst.

4. Vorrichtung nach einem der Ansprüche 1 bis 3, wobei die erste Stromversorgungsquelle (SA1) und der erste assoziierte Inverter (OND1) redundant sind.

5. Vorrichtung nach Anspruch 3, wobei die erste Stromversorgungsquelle (SA1) und der erste assoziierte Inverter (OND1) sowie die zweite Stromversorgungsquelle (SA2) und der zweite assoziierte Inverter (OND2) redundant sind.

6. System zum Steuern von elektrischen Stellantrieben einer Trägerrakete, umfassend eine Vorrichtung nach einem der Ansprüche 1 bis 5, wobei die zwei Sechsphasenmotoren (MH1, MH2) der Vorrichtung die Stellglieder betätigen.

7. Trägerrakete, ausgestattet mit einem System nach Anspruch 6.

## Claims

1. A device for controlling two multiphase motors, comprising:
- a first direct voltage power supply source (SA1) connected to a first ground (M1), connected directly to a first associated six-arm inverter (OND1);
- means (CDE) for controlling components of the device;
- a first six-branch hexaphase motor (MH1) corresponding to six evenly spatially distributed phases, the six branches of the first hexaphase motor (MH1) being respectively directly connected to the six arms of the first inverter (OND1);
- a second six-branch hexaphase motor (MH2) corresponding to six evenly spatially distributed phases, said first and second six-branch hexaphase motors (MH1, MH2), which are connected in series, corresponding to six evenly spatially distributed phases; and
- a second direct voltage power supply source (SA2) connected to a second ground (M2) different from the first ground (M1), without a direct connection between the first and second power supply sources (SA1, SA2), the second power supply source (SA2) being directly connected to a second associated six-arm inverter (OND2), the six arms of the second inverter (OND2) being respectively directly connected to the six branches of the second hexaphase motor (MH2) or to a neutral point (N) directly connected to the six phases of the second hexaphase motor (MH2),
said series connection of the two hexaphase motors (MH1, MH2) comprising pairwise connections of respective successive branches of the two hexaphase motors (MH1, MH2), said connections being alternately in phase and in phase opposition.

2. The device according to claim 1, comprising a neutral point (N) directly connected to the six phases of the second hexaphase motor (MH2), wherein the first inverter (OND1) comprises switches (IE) that are duplicated in series.

3. The device according to claim 1, comprising a second direct voltage power supply source (SA2) connected to a second ground (M2) different from the first ground (M1), connected directly to a second associated inverter (OND2), the second inverter (OND2) being directly connected to the second hexaphase motor (MH2), wherein an electrical connection between a terminal of a power supply source (SA1, SA2) directly feeding the associated inverter (OND1, OND2) and a branch of the hexaphase motor (MH1, MH2) to which the inverter (OND1, OND2) is directly connected comprises a single electronic switch.

4. The device according to any one of claims 1 to 3, wherein the first power supply source (SA1) and the first associated inverter (OND1) are redundant.

5. The device according to claim 3, wherein the first power supply source (SA1) and the first associated inverter (OND1), as well as the second power supply source (SA2) and the second associated inverter (OND2), are redundant.

6. A system for controlling electric actuators of a space launcher comprising a device according to any one of claims 1 to 5, the two hexaphase motors (MH1, MH2) of said device actuating said actuators.

7. A space launcher provided with a system according to claim 6.
